Europäisches Patentamt

European Patent Office

Office européen des brevets

(11) Publication number: **0 119 796**
**B1**

(12) **EUROPEAN PATENT SPECIFICATION**

(45) Date of publication of patent specification: **23.08.89**

(51) Int. Cl.⁴: **B 60 K 5/12, F 16 F 9/10**

(21) Application number: **84301588.4**

(22) Date of filing: **09.03.84**

(54) Vibration damping device.

(30) Priority: **09.03.83 JP 34453/83**
**13.04.83 JP 55002/83**
**13.07.83 JP 108449/83**

(43) Date of publication of application:
**26.09.84 Bulletin 84/39**

(45) Publication of the grant of the patent:
**23.08.89 Bulletin 89/34**

(84) Designated Contracting States:
**DE FR GB IT**

(56) References cited:
**EP-A-0 014 742**
**EP-A-0 040 290**
**EP-A-0 042 911**
**EP-A-0 098 331**
**EP-A-0 115 417**
**DE-U-1 805 392**
**FR-A-2 472 116**
**GB-A-2 033 534**
**GB-A-2 086 530**

**PATENTS ABSTRACTS OF JAPAN, vol. 5, no. 170 (M-94) 842r, 29th October 1981; & JP - A - 56 94 043 (TOYODA GOSEI K.K.) 30-07-1981**

(73) Proprietor: **BRIDGESTONE TIRE COMPANY LIMITED**
**10-1, Kyobashi 1-Chome Chuo-Ku Tokyo (JP)**

(72) Inventor: **Dan, Takuya**
**1082-1, Kanai-Cho Totsuka-Ku Yokohama City Kanagawa Pref. (JP)**
Inventor: **Kojima, Hiroshi**
**1082-1, Kanai-Cho Totsuka-Ku Yokohama City Kanagawa Pref. (JP)**
Inventor: **Orikawa, Michihiro**
**1052, Kashio-Cho Totsuka-Ku Yokohama City Kanagawa Pref. (JP)**

(74) Representative: **Whalley, Kevin et al**
**MARKS & CLERK 57/60 Lincoln's Inn Fields London WC2A 3LS (GB)**

(56) References cited:
**PATENTS ABSTRACTS OF JAPAN, vol. 6, no. 240 (M-174) 1118r, 27th November 1982; & JP - A - 57 138 422 (NISSAN JIDOSHA K.K.) 26-08-1982**

## Description

This invention relates to a vibration damping device for damping vibrations from a vibration source.

Vibration damping devices, sometimes referred to as vibration isolators, are used for example as engine mountings for automobile vehicles, whereby vibrations from an internal-combustion engine are absorbed so as not to be transmitted to the vehicle chassis.

As a vibration damping device of this type. there has been proposed a vibration damping device comprising two vibration-damping fluid chambers separated by a partition having an orifice formed therein, in which vibrations from a vibration source are absorbed by the flow resistance to which the fluid is subjected when the vibration is transmitted to one chamber to thereby cause the fluid to flow from the one chamber to the other through the orifice.

Such a conventional vibration damping device is effective for damping vibrations of low frequency, but is not very effective against vibrations having a high frequency of, for example. about 50 Hz or more. In the latter case, since the amplitude of the vibration is small, the orifice becomes clogged, so that the internal pressure of the fluid chamber rises and also the spring constant increases. As a result, the vibration transmissibility increases to adversely affect the ride feeling of the vehicle.

JP-A-56,94043 discloses a vibration damping device comprising two vibration-damping fluid chambers (9a, 9b), and a partition (5) interposed between these two fluid chambers and provided with a restricted passage (6); a portion of one fluid chamber side wall is constructed of a rubber resilient film (34) and film contacting members (311, 331) for regulating the deformation of the film are provided in the proximity of the film face while facing each other.

It is an aim of the present invention to provide a vibration damping device capable of damping vibrations over a wide frequency range inclusive of high frequency.

According to the invention, there is provided a vibration damping device, comprising: a rigid first disc, and a rigid second disc: an elastomeric block interposed between the first disc and the second disc; a diaphragm which is mounted peripherally of the first disc; a partition which is provided with a restricted passage and is also mounted peripherally of the first disc, thereby defining a first liquid chamber and a second liquid chamber, the first chamber being at least partly enclosed by the diaphragm and the partition, and the second chamber being at least partly enclosed by the elastomeric block and the partition; and an auxiliary vibration damping unit provided in the said second chamber; characterized in that the said auxiliary vibration damping unit comprises a freely movable part, and means to limit the amplitude of movement of the said freely movable part, in that a diaphragm is mounted peripherally of the said means limiting the amplitude of movement of the freely movable part, and an air space being defined adjacent the said diaphragm.

The auxiliary vibration-damping unit to be used in the invention may suitably comprise an elastic sheet and a pair of deformation-restricting members for the elastic sheet housing the elastic sheet therebetween. In this case, the elastic sheet may be freely movable in a space defined by these deformation-restricting members or the peripheral end of the elastic sheet may be clamped between the deformation-restricting members. Further, one or both of the deformation-restricting members may be a perforated plate. In the auxiliary vibration-damping unit of the above mentioned structure, a flexible diaphragm may be disposed outside one of the deformation-restricting members, and a plate member may further be disposed outside the flexible diaphragm so as to define a closed air chamber together therewith.

The invention will be further described, by way of example only, with reference to the accompanying, drawings, wherein;

Figure 1 is a sectional view of a first embodiment of a vibration damping device according to the invention;

Figure 2 is a sectional view illustrating the working state of the device shown in Figure 1;

Figure 3 is a sectional view of a second embodiment of a vibration damping device according to the invention;

Figure 4 is a sectional view of a third embodiment of a vibration damping device' according to the invention;

Figure 5 is a sectional view of an auxiliary vibration-damping unit used in the device of Figure 4;

Figure 6 is a plan view of a deformation-restricting member for an elastic sheet used in the unit of Figure 5;

Figure 7 is an exploded prespective view of a partition member used in the device of Figure 4; and

Figure 8 is a sectional view of a fourth embodiment of a vibration damping device according to the invention.

Like parts are designated by like numerals throughout the different figures of the drawings.

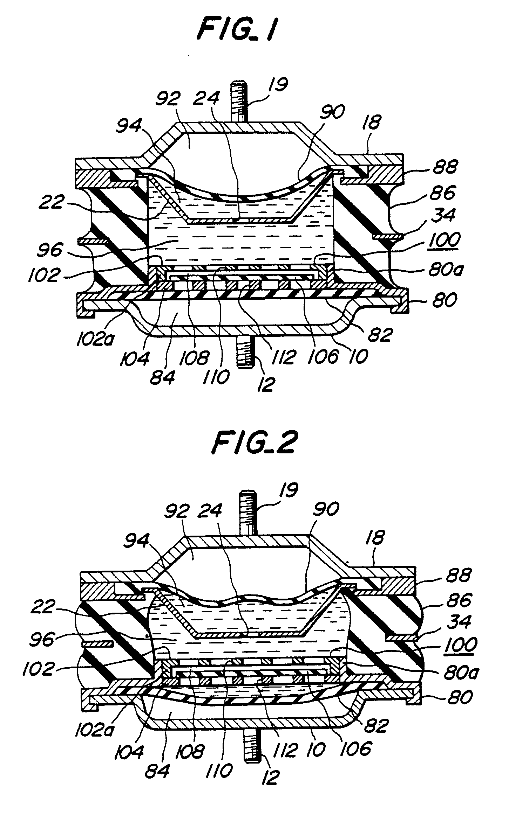

In Figures 1 and 2 is shown a first embodiment of a vibration damping device according to the invention, which is used as an engine mounting for an automobile vehicle. This vibration damping device comprises a rigid disc 10 provided with a fitting bolt 12, which is fixed to a vehicle chassis (not shown).

In this embodiment, an annular plate 80 is fixed by caulking to the outer periphery of the disc 10 having a downwardly protruded central portion, while a diaphragm 82 composed of an elastic material is clamped at its outer periphery between the disc 10 and the annular plate 80. Thus, an air chamber 84 is defined between the central protruded portion of the disc 10 and the lower diaphragm 82, wherein the diaphragm 82 may be displaced so as to reduce the volume of the air chamber 84.

To the upper surface of the annular plate 80 is bonded by vulcanization the lower end portion of a cylindrical rubber member 86. As the member 86, other elastic material may be used instead of rubber. An annular plate 88 is bonded to the upper end portion of the cylindrical rubber member 86, while a disc 18 is fixed to the upper surface of the annular plate 88. The disc is is raised at its central portion and provided with a fitting bolt 19 for carrying and fixing to an engine (not shown).

Between the disc 18 and the annular plate 88 is clamped the outer periphery of a partition 22 through the rubber member 86, while a diaphragm 90 composed of an elastic material is clamped at its outer periphery between the partition 22 and the disc 18. Thus, an air chamber 92 is defined between the diaphragm 90 and the disc 18, wherein the diaphragm 90 may be displaced so as to enlarge and reduce the volume of the air chamber 92.

A damping liquid is filled in the space defined by the diaphragm 90, diaphragm 82 and rubber member 86 to form a fluid chamber. This fluid chamber is divided by the partition 22 into a chamber 94 and a chamber 96, which communicate with each other through a circular restricted passage in the form of an orifice 24 formed in the partition 22.

Upon the rising of ambient temperature, the boiling of the liquid is prevented by pressurising the fluid chambers 94, 96 by air in the chambers 92, 84 through the diaphragms 90, 82. However, each of these air chambers 92, 84 may communicate with the ambient air.

In this embodiment, an auxiliary vibration-damping unit 100 is arranged in the fluid chamber 96 subjected to vibration from the engine (not shown). The auxiliary vibration-damping unit 100 comprises a deformation-restricting member 102 provided at its outer periphery with a downwardly projecting portion 102a, a deformation-restricting member 104, and an elastic sheet 106 interposed between the members 102 and 104.

Both of the members 102 and 104 are disc-type, and are closely fitted inside an upright portion 80a formed by bending the inner peripheral portion of the annular plate 80 upward. Moreover, the outer peripheral surface of the upright portion 80a is also bonded by vulcanization with the rubber member 86.

In the auxiliary unit 100, a displacement space 108 is defined between the members 102 and 104 by virtue of the downward projecting portion 102a. Each of the members 102 and 104 is provided with a plurality of holes 110 and 112 for communicating the displacement space 108 with the fluid chamber 96. The elastic sheet 106 disposed in the displacement space 108 is a disc composed of an elastic material such as rubber, the thickness and outer diameter of which are smaller than those of the displacement space 108. Therefore, the elastic sheet 106 is freely movable in the displacement space 108.

In the auxiliary unit 100 of the above structure, the liquid filled in the fluid chamber 96 freely flows into the displacement space 108 through the holes 110 and 112. Moreover, in order to more facilitate the flowing of the liquid in the space 108, the opposed surfaces of the members 102 and 104 facing the space 108 may be made rough or fine through-holes may be formed in the elastic sheet 106.

Furthermore, a ring member 34 is embedded in the outer peripheral portion of the rubber member 86 at the center in up and down direction so as to control the expansion of the outer diameter in the rubber member 86 within the required range.

When the vibration damping device of this embodiment is used as an engine mounting for an automobile vehicle (not shown), the weight of the engine is applied to the disc 18, whereby the liquid pressure in the fluid chambers 94 and 96 is increased as shown in Figure 2. That is, the pressure increase of the fluid chamber 94 pushes up the diaphragm 90 to reduce the volume of the air chamber 92, while the liquid in the fluid chamber 96 pushes down the diaphragm 82 through the holes 110, 112 in the auxiliary unit 100 by the pressure increase of the fluid chamber 96 to reduce the volume of the air chamber 84. Even at such a deformation state, the elastic sheet 106 is freely movable in the displacement space 108, so that it is never forced on the deformation-restricting member 102 or 104 by the pressure increase of the fluid chamber 96.

During the operation of the engine, vibrations generated from the engine are transmitted to the vibration damping device through the disc 18. Since the rubber member 86 in this device acts as a vibration-absorbing main body, the vibrations can be absorbed by the vibration-damping performance based on the internal friction of the rubber member 86. Moreover, when the vibration frequency is low, the liquid freely flows between the fluid chambers 94 and 96 through the orifice 24, during which low frequency vibration can be effectively absorbed by a damping action based on the viscosity resistance produced in the flowing of the liquid through the orifice 24. On the other hand, when vibrations generated from the engine have a high frequency of, for example, 50 Hz or more, since the amplitude of such vibrations is small, there is a possibility of producing clogging of the orifice 24. In this case, however, the elastic sheet 106 in the auxiliary unit 100 finely oscillates in the displacement space 108 to absorb the high frequency vibrations, so that there is caused no pressure increase of the fluid chamber 96 and also increase of the spring constant in the vibration damping device is suppressed effectively, resulting in adequate absorption of vibrations.

As mentioned above, vibrations having a wide frequency range can be absorbed by this vibration damping device also, so that the ride feeling of a vehicle can be improved considerably.

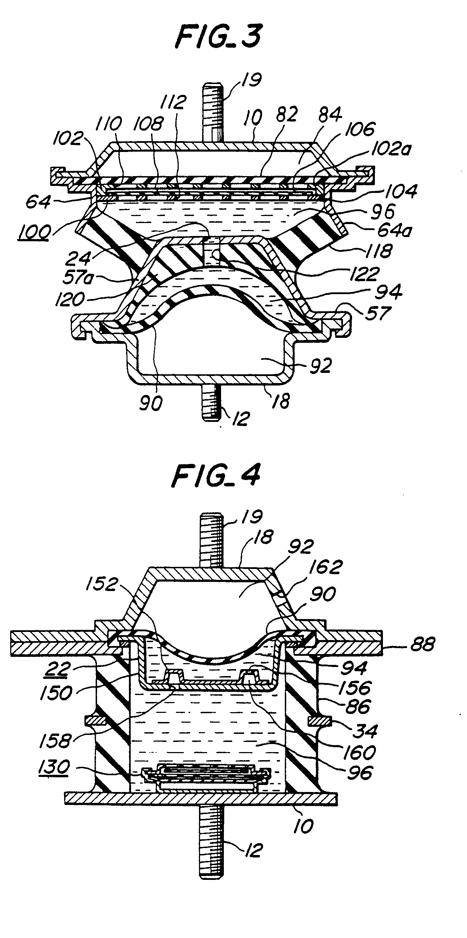

In Figure 3 is shown a second embodiment of a vibration damping device according to the invention, wherein an inner shell 57 provided with an upright portion 57a is fixed by caulking at one end to the outer peripheral portion of a disc 18, and a diaphragm 90 is airtightly clamped at its outer periphery between the lower end of the upright portion 57a and the disc 18.

A rubber annular member 118 is bonded by vulcanization at its inner surface to the outer periperal surface of the upright portion 57a. The rubber member 118 extends upward in a tapered shape gradually in diameter and is bonded by vulcanization at its outer peripheral surface to the inner surface of a downward tapered portion 64a of an outer shell 64, which is fixed by caulking at the upper end thereof to the outer periphery of a disc 10. Further, a diaphragm 82 is clamped at its outer periphery between the outer shell 64 and the disc 10.

According to this embodiment, the vibration-damping fluid chamber 96 is defined by the diaphragm 82, the outer shell 64, the rubber member 118 and the central portion of the upright portion 57a of the inner shell 57, while the vibration-damping fluid chamber 94 is defined by the upright portion 57a of the inner shell 57 and the diaphragm 90. These two fluid chambers 94 and 96 communicate with each other through a restricted passage in the form of an orifice 24 formed in the central portion of the upright portion 57a.

In this vibration damping device, the auxiliary vibration-damping unit 100 is arranged in the fluid chamber 96 in such a manner that it is inserted into the inner peripheral surface of the outer shell 64 near the diaphragm 82. The structure and function of the auxiliary unit 100 are the same as in the embodiment described with reference to Figures 1 and 2.

A lining rubber 120 is bonded by vulcanization to the inner peripheral surface of the upright portion 57a so as to align a through-hole 122 formed in the central part of the lining rubber 120 with the restricted passage 24. In this case, the length of the restricted passage 24 can be optionally adjusted by varying the thickness of the lining rubber 120 at a position corresponding to the through-hole 122. Thus, a loss factor (tan δ) of the liquid can be increased by the total length of the through-hole 122 and the restricted passage 24, whereby the vibration-damping effect can be developed against vibrations having a wider frequency range.

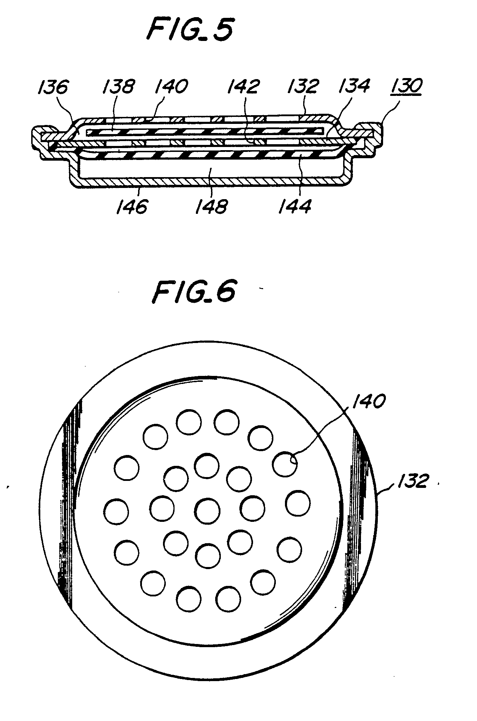

In Figure 4 is shown a third embodiment of a vibration damping device according to the invention, wherein an auxiliary vibration-damping unit 130 is placed on a disc 10 in a vibration-damping fluid chamber 96. The auxiliary unit 130 comprises a deformation-restricting member 132, a deformation-restricting member 134, and an elastic sheet 138 movably retained in a displacement space 136 defined between the members 132 and 134 as shown in Figures 5 and 6. Each of the members 132 and 134 is provided with a plurality of holes 140 and 142 for communicating the displacement space 136 with the fluid chamber 96.

In the auxiliary vibration-damping unit 130, a diaphragm 144 of disc type is arranged just below the member 134, and the diaphragm 144 and the member 134 are fixed at their outer peripheries together to the member 132 by caulking an outer peripheral end of a plate member 146, which is arranged below the diaphragm 144, to the upper member 132. Further, the central portion of the plate member 146 protrudes downward to define a closed air chamber 148 with the diaphragm 144. Thus, the closed air chamber 148 has the same action as the air chamber 84 described in the embodiments shown in Figures 1, 2 and 3.

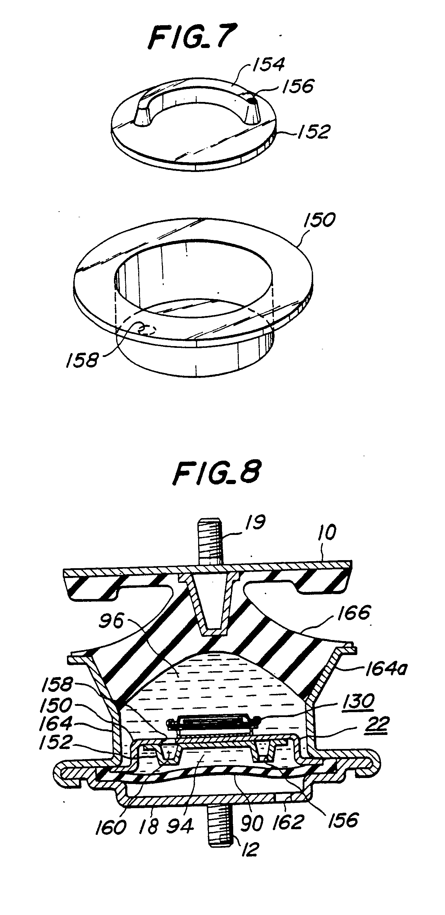

The partition 22 for separating the fluid chambers 94, 96 comprises a generally dished plate 150 shaped as shown and a disc-shaped body 152 shaped as shown in detail in Figure 7. The disc-shaped body 152 is provided with an arc-shaped protrusion 154 formed by stamping for example, i.e. a semi-circular recess is formed in the disc-shaped body 152. Further, an opening 156 is formed in one end of the protrusion 154. The disc-shaped body 152 is fixed to the recessed bottom of the plate 150 (formed by stamping for example) in such a manner that the other end of the protrusion is located over a hole 158 formed in the plate 150. Thus, the recessed portion of the body 152 extending between the openings 156 and 158 forms a restricted passage 160, wherein the openings 156 and 158 communicate with the fluid chambers 94 and 96, respectively.

Moreover, the axial length of the restricted passage 160 can optionally be adjusted by axially changing the position of the opening 158 with respect to the recessed portion of the body 152.

As shown in Figure 4, an air hole 162 is formed in the disc 18.

In this vibration damping device, vibrations generated from the engine can be effectively absorbed in the same manner as described in the previously mentioned embodiments. That is, low frequency vibrations can be absorbed by the damping action based on the viscosity resistance caused in the flowing of the liquid through the restricted passage 160, while high frequency vibrations can be absorbed by the oscillation of the elastic sheet 138 in the auxiliary unit 130.

In Figure 8 is shown a fourth embodiment of a vibration damping device according to the invention, wherein a cylindrical shell 164 is fixed by caulking at one end to the outer periphery of a disc 18, and a rubber elastic member 166 is bonded by vulcanization at the lower and outer periphery thereof to the inner periphery of the upper part 164a of the cylindrical shell 164. The rubber member 166 is also bonded by vulcanization at the top surface thereof to a disc 10. Further, a partition 22 and a diaphragm 90 are clamped at their outer peripheries between the cylindrical shell 164 and the disc 18 as shown in Figure 8. Thus, a vibration-damping fluid chamber 96 is defined by the rubber member 166, the cylindrical shell 164 and the partition 22, while a vibration-damping fluid chamber 94 is defined between the partition 22 and the diaphragm 90.

The partition 22 has the same structure as shown in Figures 4 and 7 but in this embodiment the disc-shaped body is arranged in the chamber 94.

In this vibration damping device, the same auxiliary vibration-damping unit 130 as used in the embodiment of Figure 4 is mounted on the partition 22 so as not to obstruct the opening 158 of the plate 150, which protrudes upwardly in this case.

According to the invention, one or both of the deformation-restricting members for the elastic sheet used in the auxiliary vibration-damping unit may be a latticed plate body or a checkered plate instead of being a perforated plate.

As mentioned above, according to the invention, the auxiliary vibration-damping unit is arranged in one of the two vibration-damping fluid chambers of the vibration damping device, which is subjected to vibrations generated from an engine when used as an engine mounting, so that vibrations having a wider frequency range can be effectively absorbed by the synergistic action of the two fluid chambers with the auxiliary vibration-damping unit.

## Claims

1. A vibration damping device, comprising: a rigid first disc (18), and a rigid second disc (10); an elastomeric block (86, 118, 166) interposed between the first disc (18) and the second disc (10); a diaphragm (90) which is mounted peripherally of the first disc (18); a partition (22) which is provided with a restricted passage (24, 160) and is also mounted peripherally of the first disc (18), thereby defining a first liquid chamber (94) and a second liquid chamber (96), the first chamber (94) being at least partly enclosed by the diaphragm (90) and the partition (22), and the second chamber (96) being at least partly enclosed by the elastomeric block (86, 118, 166) and the partition; and an auxiliary vibration damping unit (100, 130) provided in the said second chamber (96); characterized in that the said auxiliary vibration damping unit comprises a freely movable part (106, 138), and means (102, 104; 132, 134) to limit the amplitude of movement of the said freely movable part, and in that a diaphragm (82, 144) is mounted peripherally of the said means limiting the amplitude of movement of the freely movable part, and an air space (84, 148) being defined adjacent the said diaphragm (82, 144).

2. A vibration damping device as claimed in claim 1, characterized in that the restricted passage (160) extends in a direction generally parallel to the plane of the partition (22) and has openings (156, 158) which communicate with the respective fluid chambers (94, 96).

3. A vibration damping device as claimed in claim 1, characterized in that the restricted passage is an orifice (24) the length of which is equal to the thickness of the partition in which the orifice is provided.

4. A vibration damping device as claimed in any of claims 1 to 3, characterized in that the second chamber (96) is defined by the elastomeric block (86, 118) and the partition (22) and the second disc (10).

5. A vibration damping device as claimed in claim 4, characterized in that the air space (84) is defined between the diaphragm (82) and the second disc (10).

6. A vibration damping device as claimed in claim 1, characterized in that the air space (148) is defined between the diaphragm (144) and a plate member (146) of the auxiliary vibration-damping unit (130).

7. A vibration damping device as claimed in any of claims 1 to 3, characterized in that the second chamber (96) is defined by the elastomeric block (166) and the partition (22) and a cylindrical shell (164).

8. A vibration damping device as claimed in any of claims 1 to 7, characterized in that the said means of the auxiliary vibration-damping unit limiting the amplitude of the said freely movable part is a pair of deformation-restricting members (102, 104; 132, 134).

9. A vibration damping device as claimed in claim 8, characterized in that one or both of the deformation-restricting members (102, 104; 132, 134) is a perforated plate.

10. A vibration damping device as claimed in claim 8 or 9, characterized in that the freely movable part is an elastic sheet.

## Patentansprüche

1. Schwingungsdämpfer mit einer starren ersten Scheibe (18) und einer starren zweiten Scheibe (10); einem elastischen Block (86, 118, 166) zwischen der ersten Scheibe (18) und der zweiten Scheibe (10); einer Membran (90), deren Rand an der ersten Scheibe (18) befestigt ist; einer Trennwand (22), die einen engen Durchlaß (24, 160) aufweist und mit ihrem Rand ebenfalls an der ersten Scheibe (18) befestigt ist und dadurch eine erste Flüssigkeitskammer (94) und eine zweite Flüssigkeitskammer (96) begrenzt, wobei die erste Kammer (94) zumindest teilweise durch die Membran (90) und die Trennwand (22) umschlossen ist und die zweite Kammer (96) zumindest teilweise von dem elastischen Block (86, 118, 166) und der Trennwand umschlossen ist und einer Hilfseinheit zur Schwingungsdämpfung (100, 130), die in der zweiten Kammer (96) vorgesehen ist, dadurch gekennzeichnet, daß die Hilfseinheit zur Schwingungsdämpfung ein frei bewegbares Bauteil (106, 138) sowie Mittel (102, 104; 132, 134) zur Begrenzung der Amplitude der Bewegung des frei bewegbaren Bauteils aufweist und daß eine Membran (82, 144) am Rand der die Bewegungsamplitude des frei beweglichen Teils begrenzenden Mittel abgestützt ist, und ein Luftraum (84, 148) angrenzend an die Membran (82, 144) vorgesehen ist.

2. Schwingungsdämpfer nach Anspruch 1, dadurch gekennzeichnet, daß der enge Durchlaß (160) sich im allgemeinen in Richtung parallel zu der Ebene der Trennwand (22) erstreckt und Öffnungen (156, 158) besitzt, die mit den entsprechenden Flüssigkeitskammern (94, 96) in Verbindung stehen.

3. Schwingungsdämpfer nach Anspruch 1, dadurch gekennzeichnet, daß der enge Durchlaß eine Öffnung (24) ist, deren Länge gleich der Dicke der Trennwand ist, in welcher die Öffnung vorgesehen ist.

4. Schwingungsdämpfer nach einem der Ansprüche 1 bis 3, dadurch gekennzeichnet, daß die zweite Kammer (96) von dem elastischen Block (86, 118) und der Trennwand (22) und der zweiten Scheibe (10) begrenzt ist.

5. Schwingungsdämpfer nach Anspruch 4, dadurch gekennzeichnet, daß der Luftraum (84) zwischen Membran (82) und zweiter Scheibe (10) gebildet ist.

6. Schwingungsdämpfer nach Anspruch 1, dadurch gekennzeichnet, daß der Luftraum (148) zwischen der Membran (144) und einer Platte (146) der Hilfseinheit zur Schwingungsdämpfung (130) gebildet ist.

7. Schwingungsdämpfer nach einem der Ansprüche 1 bis 3, dadurch gekennzeichnet, daß die zweite Kammer (96) von dem elastischen Block (166), der Trennwand (22) und einer zylindrischen Hülle (164) begrenzt ist.

8. Schwingungsdämpfer nach einem der Ansprüche 1 bis 7, dadurch gekennzeichnet, daß die zur Hilfseinheit für die Schwingungsdämpfung gehörigen Mittel zur Begrenzung der Bewegungsamplitude des frei beweglichen Bauteils ein Paar verformungsbegrenzende Bauteile (102, 104; 132, 134) sind.

9. Schwingungsdämpfer nach Anspruch 8, dadurch gekennzeichnet, daß eines der deformationsbegrenzenden Glieder (102, 104; 132, 134) oder beide eine Lochplatte ist bzw. sind.

10. Schwingungsdämpfer nach Anspruch 8 oder 9, dadurch gekennzeichnet, daß das frei bewegbare Bauteil eine elastische Folie ist.

**Revendications**

1. Un dispositif amortisseur de vibrations comprenant: un premier disque rigide (18), et un deuxième disque rigide (10); un bloc élastomère (86, 118, 166) interposé entre le premier disque (18) et le deuxième disque (10), un diaphragme (90) qui est monté à la périphérie du premier disque (18); une cloison (22) comportant un passage restreint (24, 60) et qui est aussi montée sur le premier disque (18) à sa périphérie, définissant ainsi une première chambre de liquide (94) et une deuxième chambre de liquide (96), la première chambre (94) étant au moins partiellement fermée par le diaphragme (90) et la cloison (22) et la deuxième chambre (96) étant au moins partiellement fermée par le bloc élastomère (85, 118, 166) et la cloison; et une unité auxiliaire d'amortissement de vibrations (100, 130), réalisée dans ladite deuxième chambre (96); caractérisé en ce que ladite unité auxiliaire d'amortissement de vibrations comprend une pièce librement mobile (106, 138) et des moyens (102, 104; 132, 134) pour limiter l'amplitude du déplacement de ladite pièce librement mobile, et en ce qu'un diaphragme (82, 144) est monté à la périphérie desdits moyens limitant l'amplitude du déplacement de la pièce librement mobile, et un espace d'air (84, 148) étant défini adjacent audit diaphragme (82, 144).

2. Un dispositif amortisseur de vibrations selon la revendication 1, caractérisé en ce que le passage restreint (160) s'étend dans une direction parallèle dans son ensemble au plan de la cloison (22) et comporte des ouvertures (156, 158) qui communiquant avec les chambres respectives de fluide (94, 96).

3. Un dispositif amortisseur de vibrations selon la revendication 1, caractérisé en ce que le passage restreint est un orifice (24) dont la longueur est égale à l'épaisseur de la cloison dans laquelle est ménagé l'orifice.

4. Un dispositif amortisseur de vibrations selon l'une quelconque des revendications 1 à 3, caractérisé en ce que la deuxième chambre (96) est définie par le bloc élastomère (85, 118) et la cloison (22) et le deuxième disque (10).

5. Un dispositif amortisseur de vibrations selon la revendication 4, caractérisé en ce que l'espace d'air (84) est défini entre le diaphragme (82) et le deuxième disque (10).

6. Un dispositif amortisseur de vibrations selon la revendication 1, caractérisé en ce que l'espace d'air (148) est défini entre le diaphragme (144) et un organe en forme de plaque (146) de l'unité auxiliaire d'amortissement de vibrations (130).

7. Un dispositif amortisseur de vibrations selon l'une quelconque des revendications 1 à 3, caractérisé en ce que la deuxième chambre (96) est définie par le bloc élastomère (166) et la cloison (22) et une enveloppe cylindrique (164).

8. Un dispositif amortisseur de vibrations selon l'une quelconque des revendications 1 à 7, caractérisé en ce que lesdits moyens de l'unité auxiliaire d'amortissement de vibrations limitant l'amplitude de ladite pièce librement mobile sont une paire d'organe restreignant la déformation (102, 104; 132, 134).

9. Un dispositif amortisseur de vibrations selon la revendication 8, caractérisé en ce que l'un des organes restreignant la déformation ou les deux (102, 104; 132, 134) est une plaque perforée.

10. Un dispositif amortisseur de vibrations selon la revendication 8 ou 9, caractérisé en ce que la pièce librement mobile est une feuille élastique.

EP 0 119 796 B1

## FIG. 1

## FIG. 2

## FIG_3

## FIG_4

2

## FIG_5

136  138  140  142  132  134  130

146  148  144

## FIG_6

140

132

## FIG.7

154
156
152
150
158

## FIG.8

19
10
96
166
164a
158
150
164
152
130
22
160 18 94   90 162   156
12

4